# EUROPEAN PATENT APPLICATION

(11) **EP 4 472 342 A2**
(43) Date of publication of application: **04.12.2024**
(21) Application number: 24198735.3
(22) Date of filing: 06.05.2022
(51) Int. Cl.: H04W 88/06

(54) **OBTAINING A CALLER ID ON A SECOND SIM OF A MULTI-SIM USER EQUIPMENT**

(30) Priority: 10.05.2021 US 202163201703 P; 29.04.2022 US 202217661385
(62) Divisional of application: 22172036.0
(71) Applicant: Apple Inc., Cupertino, CA 95014 (US)
(72) Inventor: LOVLEKAR, Srirang A., Fremont (US); GURUMOORTHY, Sethuraman, San Ramon (US); SAMBHWANI, Sharad, San Diego (US); KODALI, Sree Ram, San Jose (US); PALLE VENKATA, Naveen Kumar R., San Diego (US)
(74) Representative: Rooney, John-Paul

(57) **Abstract**

There is provided a processor configured to: generate, for transmission to a multi-user subscriber identity module, MUSIM, user equipment, UE, a paging request indicating an incoming voice call associated with a first SIM of the MUSIM UE; perform a radio resource control, RRC, connection setup with the MUSIM UE; process, based on signaling received from the MUSIM UE, a UE assistance information, UAI, message including an RRC connection release request; and generate, for transmission to the MUSIM UE, an RRC connection release.

## Description

### BACKGROUND

In 5G new radio (NR) networks, a user equipment (UE) may be configured with multiple universal subscriber identity modules (SIMs) (e.g., two SIMs). In some cases, the UE may include multiple receivers but a single transmitter, in which case the UE is categorized as a dual receiver dual SIM dual standby (DR-DSDS) UE. When the UE receives a call via a second SIM while on an active call via the first SIM, the second SIM performs a radio resource control (RRC) connection to obtain the caller ID of the incoming call.

### SUMMARY

Some exemplary embodiments are related to a processor of a user equipment (UE) configured to perform operations. The operations include initiating a first voice call with a first network associated with a first subscriber identity module (SIM) of the UE, receiving a paging request from a second network indicating an incoming voice call associated with a second SIM of the UE, wherein the paging request is received while the first voice call is active, performing a radio resource control (RRC) connection setup with the second network and performing one of accepting the incoming voice call or rejecting the incoming voice call.

Other exemplary embodiments are related to a processor of a base station configured to perform operations. The operations include transmitting a paging request to a user equipment (UE) indicating an incoming voice call associated with a second subscriber identity module (SIM) of the UE, wherein the UE receives the paging request while a first voice call associated with a first SIM of the UE is active, performing a radio resource control (RRC) connection setup with the UE, receiving an indication from the UE that the UE should be configured with a single component carrier (CC), suspending dual connectivity (DC) and carrier aggregation (CA) and exchanging session information protocol (SIP) messages with the UE to provide the UE with a caller identification (ID) of the incoming call.

Still further exemplary embodiments are related to a processor of a user equipment (UE) configured to perform operations. The operations include initiating a first voice call with a first network associated with a first subscriber identity module (SIM) of the UE, receiving a paging request from a second network indicating an incoming voice call associated with a second SIM of the UE, wherein the paging request is received while the first voice call is active, performing a radio resource control (RRC) connection setup with the second network, exchanging session information protocol (SIP) messages with the second network to retrieve a caller identification (ID) of the incoming call and tuning a transmitter of the UE to a frequency associated with the second network at one or more predetermined periods during the RRC connection setup and the SIP messages exchange with the second network.

### BRIEF DESCRIPTION OF THE DRAWINGS

Fig. 1 shows an exemplary network arrangement according to various exemplary embodiments.
Fig. 2 shows an exemplary multi-user subscriber identification module (MUSIM) user equipment (UE) according to various exemplary embodiments.
Fig. 3 shows an exemplary base station according to various exemplary embodiments.
Figs. 4a and 4b show signaling diagrams illustrating a method for providing an indication to a network that a MUSIM UE should not be configured with carrier aggregation (CA) or multi-radio access network (multi-RAN) dual connectivity (MR-DC) according to various exemplary embodiments.
Figs. 5a and 5b show signaling diagrams illustrating a method for providing an indication to a network that a MUSIM UE should not be configured with CA or MR-DC according to various exemplary embodiments.
Fig. 6 shows a signaling diagram illustrating a method for tuning away a transmitter of a UE from a first SIM to a second SIM during a caller ID retrieval procedure on the second SIM according to various exemplary embodiments.
Figs. 7A-7C show signaling diagrams illustrating a method for a procedure-based tuning away of a transmitter of a UE from a first SIM to a second SIM according to various exemplary embodiments.
Fig. 8 shows a signaling diagram illustrating a method for a transmission-based tuning away of a transmitter of a UE from a first SIM to a second SIM according to various exemplary embodiments.
Fig. 9A shows an exemplary MUSIM UE having a single transmitter according to various exemplary embodiments.
Fig. 9B shows an exemplary MUSIM UE having multiple transmitters according to various exemplary embodiments.
Fig. 9C shows an exemplary transmission power graph relating to power management of a multi-transmitter MUSIM UE according to various exemplary embodiments.

### DETAILED DESCRIPTION

The exemplary embodiments may be further understood with reference to the following description and the related appended drawings, wherein like elements are provided with the same reference numerals. The exemplary embodiments describe a user equipment (UE) providing an indication to a base station of a 5G new radio (NR) network not to configure the UE with carrier aggregation (CA) and/or multi-radio access network (multi-RAN) dual connectivity (MR-DC). The exemplary embodiments further describe a UE tuning away a transmitter from the frequency of a first network corresponding to a first SIM to the frequency of a second network corresponding to a second SIM during an active call on the first SIM.

The exemplary embodiments are described with regard to a network that includes 5G NR radio access technology (RAT). However, the exemplary embodiments may be implemented in other types of networks using the principles described herein.

Throughout this description reference is made to the SIMs performing a function (e.g., communicating with the wireless network). However, those skilled in the art will understand that the SIMs themselves do not perform any functions or operations. Rather, the UE, or more precisely a processor of the UE, implements one or more protocol stacks using the credentials and other information stored on the SIMs and then establishes a connection with networks using the one or more protocol stacks. Thus, when referring to a SIM communicating with a network, this should be understood to include the UE or the processor of the UE communicating via a connection associated with the SIM. Similarly, any other operation attributed to the SIM herein should be understood to be an operation being performed by a protocol stack implemented by the processor using the information provided by the SIM.

The exemplary embodiments are also described with regard to a UE. However, the use of a UE is merely for illustrative purposes. The exemplary embodiments may be utilized with any electronic component that may establish a connection with a network and is configured with the hardware, software, and/or firmware to exchange information and data with the network. Therefore, the UE as described herein is used to represent any electronic component.

When a multi-user subscriber identity module (MUSIM) UE is in a radio resource control (RRC) connected state with a first network via a first SIM (SIM1) and has an ongoing voice call, a paging request for a call (voice/data) may be received from a second network via a second SIM (SIM2). In this scenario, the UE establishes an RRC connection with the second network via the SIM2 to obtain the caller ID associated with incoming call. Typically, all but one (N-1) of the UE's multiple receivers are allocated to SIM1 for the ongoing voice call and one receiver is allocated to SIM2, which is in an RRC Idle state (or an RRC Inactive state), to receive pages, maintain idle mobility, etc. When SIM2 establishes an RRC connection with the second network to obtain the caller ID of the incoming call, the second network may configure the UE with carrier aggregation (CA) and/or multi-radio access network (multi-RAN) dual connectivity (MR-DC). However, because only one of the UE's receivers is allocated to the SIM2, the RRC configuration of the SIM2 with CA and/or MR-DC will fail, thus failing to provide the caller ID to the UE.

According to some exemplary embodiments, when the MUSIM UE receives a paging request for a voice call on the SIM2 while there is an ongoing call on the SIM1, the UE may provide an indication to the second network that dual connectivity (DC) CA should be suspended such that the second network only configures the UE with a single component carrier (CC) on the SIM2.

Because a MUSIM UE may have multiple receivers and only one transmitter, that transmitter is shared between the SIM1 and the SIM2 when necessary. When there is an active voice call on the SIM1, the UE uses the transmitter primarily for the SIM1 voice call. However, when the SIM2 receives a paging request regarding an incoming call from the second network while the voice call on the SIM1 is still ongoing, the UE uses the transmitter to establish an RRC connection with the second network to obtain the caller ID for the incoming call. However, there is presently no configuration of shared allocation of the transmitter between the SIM1 and SIM2 in such a scenario in the Third Generation Partnership (3GPP) standards.

According to further exemplary embodiments, the UE is configured to tune away the transmitter from a frequency associated with the SIM1 to a frequency associated with the SIM2 during one or more predetermined periods during the caller ID retrieval process in such a way so as not to degrade the SIM1 ongoing call.

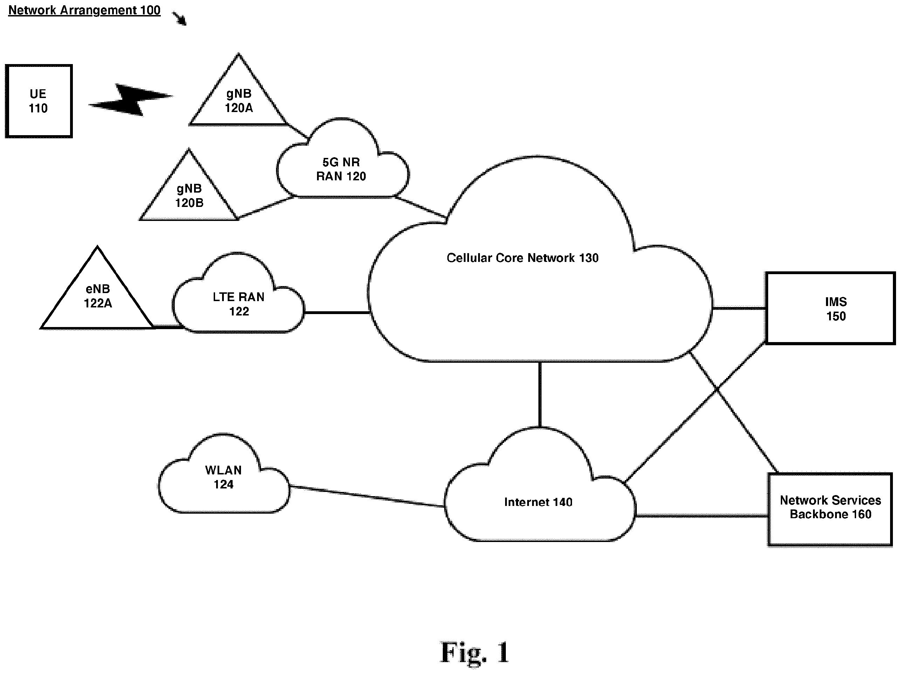

Fig. 1 shows an exemplary network arrangement 100 according to various exemplary embodiments. The exemplary network arrangement 100 includes a UE 110. It should be noted that any number of UEs may be used in the network arrangement 100. Those skilled in the art will understand that the UE 110 may alternatively be any type of electronic component that is configured to communicate via a network, e.g., mobile phones, tablet computers, desktop computers, smartphones, phablets, embedded devices, wearables, Internet of Things (IoT) devices, etc. It should also be understood that an actual network arrangement may include any number of UEs being used by any number of users. Thus, the example of a single UE 110 is merely provided for illustrative purposes.

The UE 110 may be configured to communicate with one or more networks. In the example of the network configuration 100, the networks with which the UE 110 may wirelessly communicate are a 5G New Radio (NR) radio access network (5G NR-RAN) 120, an LTE radio access network (LTE-RAN) 122 and a wireless local access network (WLAN) 124. However, it should be understood that the UE 110 may also communicate with other types of networks and the UE 110 may also communicate with networks over a wired connection. Therefore, the UE 110 may include a 5G NR chipset to communicate with the 5G NR-RAN 120, an LTE chipset to communicate with the LTE-RAN 122 and an ISM chipset to communicate with the WLAN 124.

The 5G NR-RAN 120 and the LTE-RAN 122 may be portions of cellular networks that may be deployed by cellular providers (e.g., Verizon, AT&T, T-Mobile, etc.). These networks 120, 122 may include, for example, cells or base stations (Node Bs, eNodeBs, HeNBs, eNBS, gNBs, gNodeBs, macrocells, microcells, small cells, femtocells, etc.) that are configured to send and receive traffic from UE that are equipped with the appropriate cellular chip set. The WLAN 124 may include any type of wireless local area network (WiFi, Hot Spot, IEEE 802.11x networks, etc.).

The UE 110 may connect to the 5G NR-RAN 120 via the next generation Node B (gNB) 120A and/or the gNB 120B. During operation, the UE 110 may be within range of a plurality of gNBs. Thus, either simultaneously or alternatively, the UE 110 may connect to the 5G NR-RAN 120 via the gNBs 120A and 120B. Further, the UE 110 may communicate with the eNB 122A of the LTE-RAN 122 to transmit and receive control information used for downlink and/or uplink synchronization with respect to the 5G NR-RAN 120 connection.

Those skilled in the art will understand that any association procedure may be performed for the UE 110 to connect to the 5G NR-RAN 120. For example, as discussed above, the 5G NR-RAN 120 may be associated with a particular cellular provider where the UE 110 and/or the user thereof has a contract and credential information (e.g., stored on a SIM card). Upon detecting the presence of the 5G NR-RAN 120, the UE 110 may transmit the corresponding credential information to associate with the 5G NR-RAN 120. More specifically, the UE 110 may associate with a specific base station (e.g., the gNB 120A of the 5G NR-RAN 120).

In addition to the networks 120, 122 and 124 the network arrangement 100 also includes a cellular core network 130, the Internet 140, an IP Multimedia Subsystem (IMS) 150, and a network services backbone 160. The cellular core network 130 may be considered to be the interconnected set of components that manages the operation and traffic of the cellular network, e.g. the 5GC for NR. The cellular core network 130 also manages the traffic that flows between the cellular network and the Internet 140.

The IMS 150 may be generally described as an architecture for delivering multimedia services to the UE 110 using the IP protocol. The IMS 150 may communicate with the cellular core network 130 and the Internet 140 to provide the multimedia services to the UE 110. The network services backbone 160 is in communication either directly or indirectly with the Internet 140 and the cellular core network 130. The network services backbone 160 may be generally described as a set of components (e.g., servers, network storage arrangements, etc.) that implement a suite of services that may be used to extend the functionalities of the UE 110 in communication with the various networks.

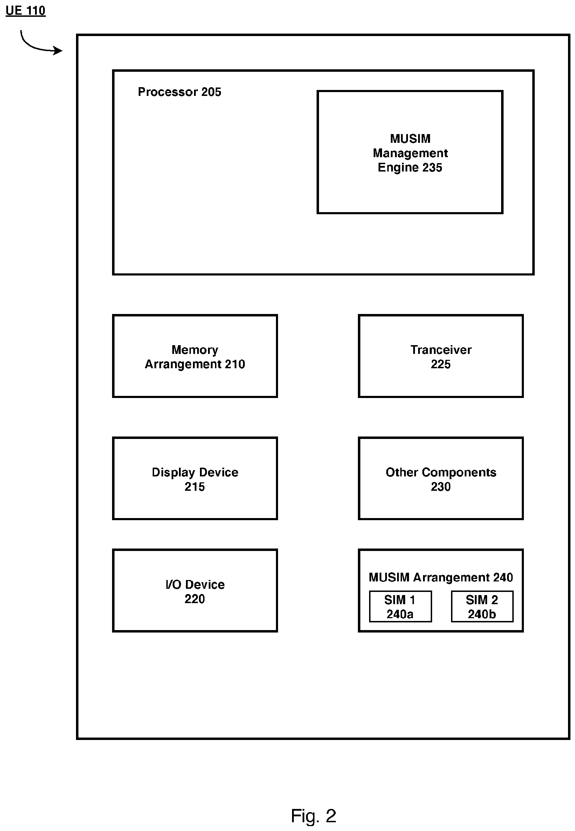

Fig. 2 shows an exemplary UE 110 according to various exemplary embodiments. The UE 110 will be described with regard to the network arrangement 100 of Fig. 1. The UE 110 may represent any electronic device and may include a processor 205, a memory arrangement 210, a display device 215, an input/output (I/O) device 220, a transceiver 225, other components 230, and a multi-universal SIM (MUSIM) arrangement 240. The other components 230 may include, for example, an audio input device, an audio output device, a battery that provides a limited power supply, a data acquisition device, ports to electrically connect the UE 110 to other electronic devices, one or more antenna panels, etc. For example, the UE 110 may be coupled to an industrial device via one or more ports. The MUSIM arrangement 240 may include a first SIM (SIM1) 240a and a second SIM (SIM2) 240b, each of which may be coupled to different gNBs 120a, 120b (or eNB 122A) of different networks.

The processor 205 may be configured to execute a plurality of engines of the UE 110. For example, the engines may include a MUSIM management engine 235. The MUSIM management engine 235 may perform various operations related to managing a caller ID retrieval process where it may be indicated to the network 100 that a dual connectivity (DC) carrier aggregation (CA) configuration should be suspended and/or tuning the transceiver 225 away at predetermined periods of time during the caller ID retrieval process. Examples of this process will be described in greater detail below.

The above referenced engine being an application (e.g., a program) executed by the processor 205 is only exemplary. The functionality associated with the engine may also be represented as a separate incorporated component of the UE 110 or may be a modular component coupled to the UE 110, e.g., an integrated circuit with or without firmware. For example, the integrated circuit may include input circuitry to receive signals and processing circuitry to process the signals and other information. The engines may also be embodied as one application or separate applications. In addition, in some UE, the functionality described for the processor 205 is split among two or more processors such as a baseband processor and an applications processor. The exemplary embodiments may be implemented in any of these or other configurations of a UE.

The memory arrangement 210 may be a hardware component configured to store data related to operations performed by the UE 110. The display device 215 may be a hardware component configured to show data to a user while the I/O device 220 may be a hardware component that enables the user to enter inputs. The display device 215 and the I/O device 220 may be separate components or integrated together such as a touchscreen. The transceiver 225 may be a hardware component configured to establish a connection with the 5G NR-RAN 120, the LTE-RAN 122, the WLAN 124, etc. Accordingly, the transceiver 225 may operate on a variety of different frequencies or channels (e.g., set of consecutive frequencies).

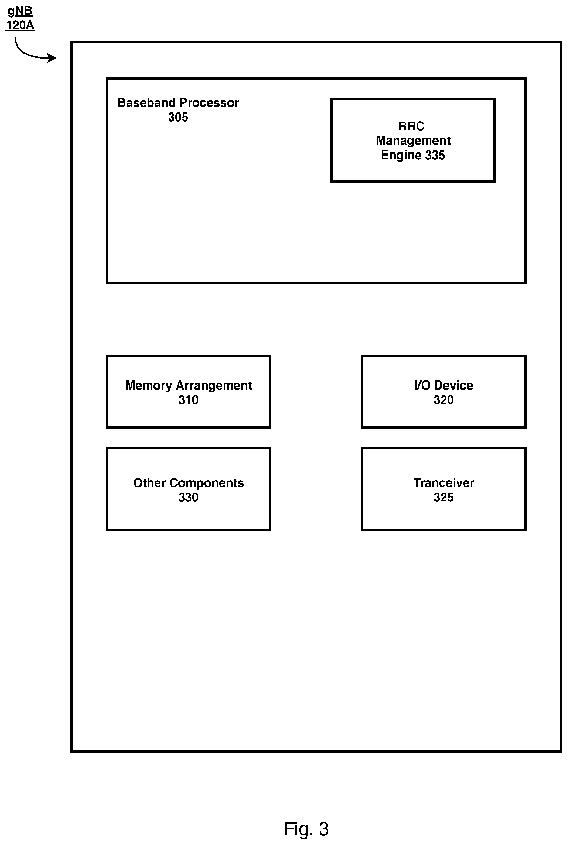

Fig. 3 shows an exemplary network base station, in this case gNB 120A, according to various exemplary embodiments. The gNB 120A may represent any access node of the 5G NR network through which the UEs 110 may establish a connection. The gNB 120A illustrated in Fig. 3 may also represent the gNB 120B.

The gNB 120A may include a processor 305, a memory arrangement 310, an input/output (I/O) device 320, a transceiver 325, and other components 330. The other components 330 may include, for example, a power supply, a data acquisition device, ports to electrically connect the gNB 120A to other electronic devices, etc.

The processor 305 may be configured to execute a plurality of engines of the gNB 120A. For example, the engines may include an RRC management engine 335 for performing operations including configuring an RRC connection for one or more SIMS of the MUSIM arrangement 240 of the UE 110. Examples of this process will be described in greater detail below.

The above noted engine being an application (e.g., a program) executed by the processor 305 is only exemplary. The functionality associated with the engines may also be represented as a separate incorporated component of the gNB 120A or may be a modular component coupled to the gNB 120A, e.g., an integrated circuit with or without firmware. For example, the integrated circuit may include input circuitry to receive signals and processing circuitry to process the signals and other information. In addition, in some gNBs, the functionality described for the processor 305 is split among a plurality of processors (e.g., a baseband processor, an applications processor, etc.). The exemplary aspects may be implemented in any of these or other configurations of a gNB.

The memory 310 may be a hardware component configured to store data related to operations performed by the UEs 110, 112. The I/O device 320 may be a hardware component or ports that enable a user to interact with the gNB 120A. The transceiver 325 may be a hardware component configured to exchange data with the UE 110 and any other UE in the system 100. The transceiver 325 may operate on a variety of different frequencies or channels (e.g., set of consecutive frequencies). Therefore, the transceiver 325 may include one or more components (e.g., radios) to enable the data exchange with the various networks and UEs.

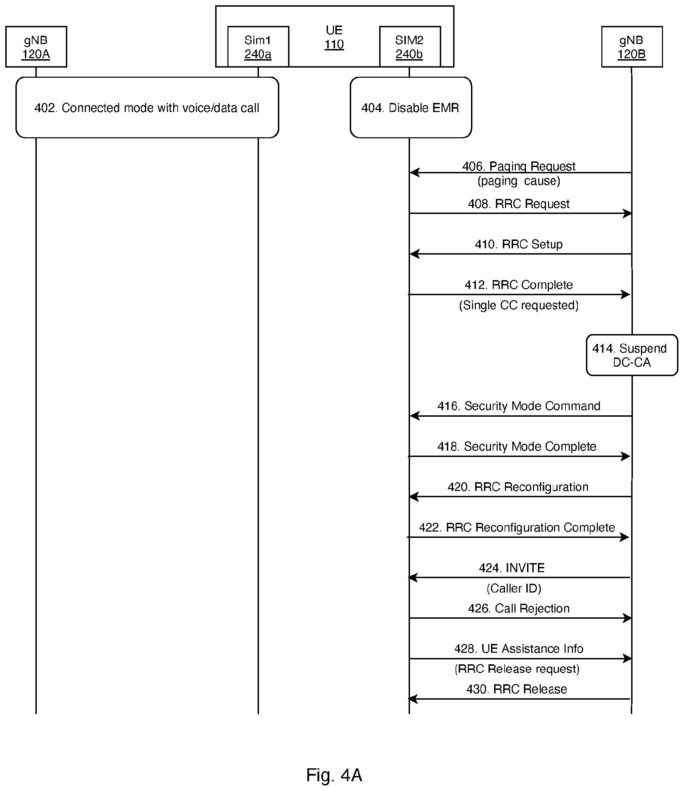

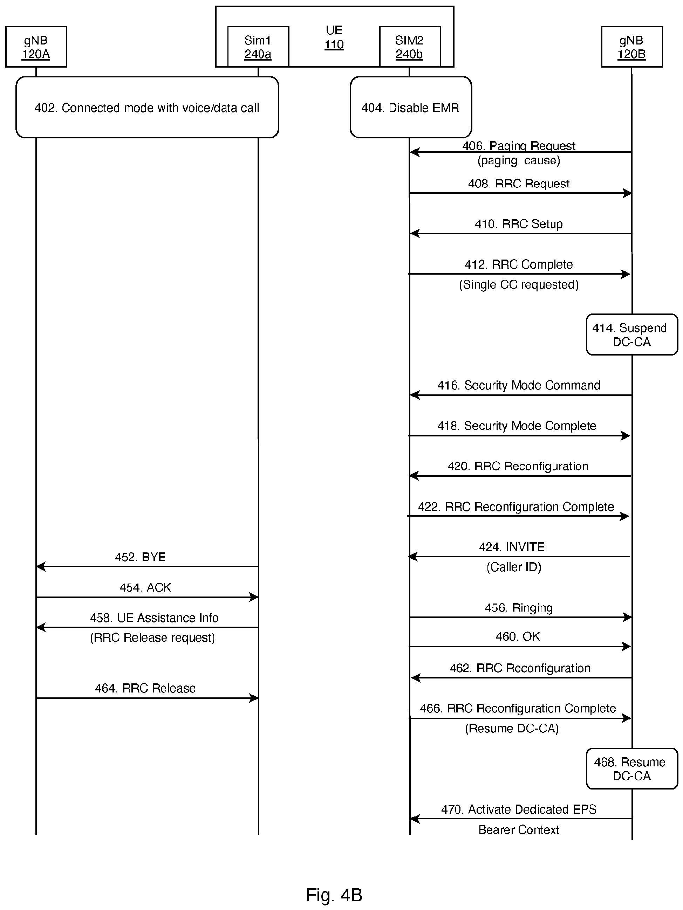

Figs. 4a and 4b show signaling diagrams illustrating a method for providing an indication to a network that a MUSIM UE 110 should not be configured with carrier aggregation (CA) or multi-radio access network (multi-RAN) dual connectivity (MR-DC) according to various exemplary embodiments. Fig. 4A illustrates the process when a user rejects an incoming call for the SIM2 240b. At 402, the SIM1 204a is in an RRC connected mode with a first network (a first gNB 120A) for an active voice or data call. It is assumed that the SIM2 240b is in an RRC Idle mode (or RRC Inactive mode). At 404, the UE 110 disables early measurement reporting (EMR) on the SIM2 240b, which may have been configured by a second network (a second gNB 120B) prior to SIM2 240b being in the RRC Idle mode (or RRC Inactive mode).

At 406, SIM2 240b receives a paging request from the second network with a paging_cause field that identifies whether this page is for a voice call or a data call. The remaining description of the signaling diagram of Fig. 4A (as well as the remaining signaling diagrams discussed below) assumes that the paging_cause indicates that the paging request is for a voice call. If, however, the paging cause is for a data call, the UE 110 ignores the paging request (and any subsequent retransmissions of the paging request) while the SIM1 240a has an active call with the first network because a data call would require increased use of the single transmitter, which would degrade the call on the SIM1 240a.

At 408, the SIM2 240b transmits an RRC Connection Request to the second gNB 120B. At 410, the second gNB 120B transmits an RRC Connection Setup message to the SIM2 240b. At 412, the SIM2 240b transmits an RRC Connection Setup Complete message to the second gNB 120B. In some embodiments, the RRC complete message may include an request to the second network that a single component carrier (CC) be configured for SIM2. Upon receiving this RRC Connection Setup Complete message, the second gNB 120B suspends dual connectivity (DC) carrier aggregation (CA) at 414.

At 416, the second gNB 120B transmits a Security Mode Command message to the SIM2 240b to configure the UE 110 to activate access stratum (AS) security. At 418, the SIM2 transmits a Security Mode Complete message to the second gNB 120B. At 420, the second gNB 120B transmits an RRC Reconfiguration to the SIM2 240b to configure the necessary data radio bearers (DRBs). At 422, the SIM2 240b transmits an RRC Reconfiguration Complete message to the second gNB 120B.

At 424, the second gNB 120B transmits a session initiation protocol (SIP) INVITE message to the SIM2 240b including the caller ID associated with the incoming voice call over the default IMS bearer. As such, the UE 110 displays the caller ID and allows the user to decide whether or not to accept the incoming call (and drop the active call on SIM1). As noted above, Fig. 4A assumes that the user rejects the call. So, at 426, the SIM2 240b transmits a SIP Call Rejection message (e.g., SIP 486 message, SIP 603 message, etc.) to the second gNB 120B. As a result, the voice call on SIM1 continues and the incoming call on the SIM2 is rejected.

At 428, the SIM2 240b transmits a UE Assistance Information (UAI) message to the second gNB 120B indicating that the RRC connection should be released. In some embodiments, this indication may be a PreferredRRCState field indicating Idle mode (PreferredRRCState=Idle or PreferredRRCState=INACTIVE). In some embodiments, this indication may alternatively include a new cause that indicates to the second gNB 120B that the SIM2 240b is requesting an RRC release. At 430, the second gNB 120B releases the SIM2 RRC connection.

Fig. 4B illustrates the process when a user accepts an incoming call for SIM2 240b. Since 402-424 are identical to those corresponding steps in Fig. 4A, an explanation of these operations is omitted here. After the caller ID is displayed to the user, if the user wishes to accept the incoming call on the SIM2, the SIM1 240a transmits, at 452, a SIP BYE message to the first gNB 120A indicating that the voice call on the SIM1 240a should be terminated. At 454, the first gNB 120A transmits an acknowledgement (ACK) for the received SIP BYE message. At 458, the SIM1 240a transmits a UAI message to the first gNB 120A indicating that the RRC connection for the SIM1 240a should be released. In some embodiments, this indication may have a *PreferredRRCState* field indicating Idle mode (*PreferredRRCState=Idle*) or Inactive mode (PreferredRRCState=INACTIVE). In some embodiments, this indication may alternatively include a new cause that indicates to the first gNB 120A that the UE is a MUSIM UE and is accepting a call on another SIM.

At 456, the SIM2 240b transmits a SIP Ringing message to the second gNB 120B so that the calling party knows the call is ringing. At 460, the SIM 2 240b transmits a SIP 200 OK message to the second gNB 120B. At 462, the second gNB 120B transmits an RRC Reconfiguration message to the SIM2 240b indicating the DRBs for voice packets. At 464, the first gNB 120A transmits an RRC Release message to the SIM1 240a to release the SIM1 RRC connection. As such, the SIM1 240a is now in RRC Idle mode (or RRC Inactive mode). At 466, the SIM2 240b transmits an RRC Reconfiguration Complete message to the second gNB 120B indicating that DC-CA may now be resumed (since the user is accepting the SIM2 240b incoming call and all but one of the UE's receivers are now allocated to the SIM2 240b call). At 468, the second gNB 120B resumes DC-CA for the SIM2 240b. At 470, the second gNB 120B transmits an Activate Dedicated evolved packet system (EPS) Bearer Context message to the SIM2 240b to configure the SIM2 240a with the bearer context for the bearer that will be carrying the voice packets.

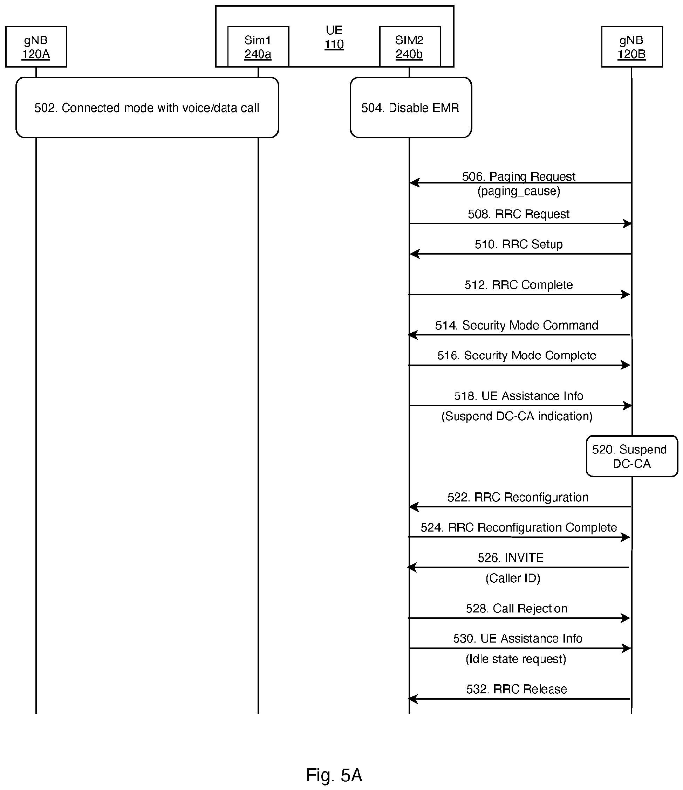

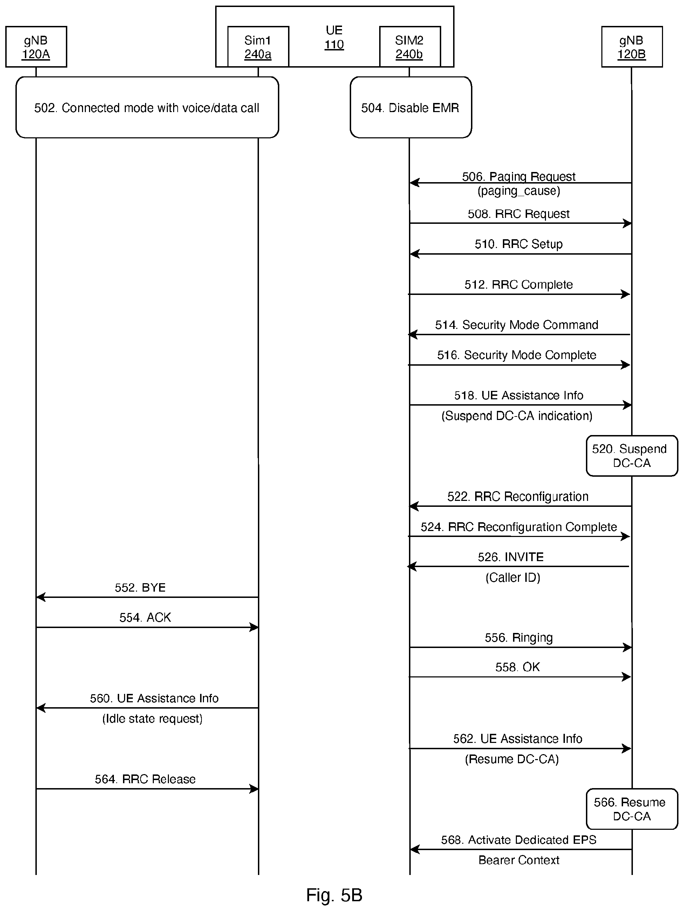

Figs. 5a and 5b show signaling diagrams illustrating a method for providing an indication to a network that a MUSIM UE 110 should not be configured with CA or MR-DC according to various exemplary embodiments. Fig. 5A illustrates the process when a user rejects an incoming call for the SIM2 240b. At 502, the SIM1 204a is in an RRC connected mode with a first network (a first gNB 120A) for an active voice or data call. It is assumed that the SIM2 240b is in an RRC Idle mode (or RRC Inactive mode). At 504, the UE 110 disables EMR on the SIM2 240b, which may have been configured by a second network (a second gNB 120B) prior to the SIM2 240b being in the RRC Idle mode (or RRC Inactive mode).

At 506, the SIM2 240b receives a paging request from the second network with a paging_cause field that identifies whether this page is for a voice call or a data call. The remaining description of the signaling diagram of Fig. 5A assumes that the paging_cause indicates that the paging request is for a voice call. If, however, the paging cause is for a data call, the UE 110 ignores the paging request while the SIM1 240a has an active call with the first network because a data call would require increased use of the UE's single transmitter, which would degrade the call on the SIM1 240a. In addition, from a service perspective, a purely data service (e.g., internet browsing) has a lower priority than a voice service (e.g., VoLTE, VoNR, etc.).

At 508, the SIM2 240b transmits an RRC Connection Request to the second gNB 120B. At 510, the second gNB 120B transmits an RRC Connection Setup message to the SIM2 240b. At 512, the SIM2 240b transmits an RRC Connection Setup Complete message to the second gNB 120B. At 514, the second gNB 120B transmits a Security Mode Command message to the SIM2 240b to configure the UE 110 to activate AS security. At 516, the SIM2 240b transmits a Security Mode Complete message to the second gNB 120B.

At 518, the SIM2 240b transmits a UAI message to the second gNB 120B including an indication that DC-CA should be suspended. In some embodiments, this indication may be an implicit indication provided by using a maxAggrBW information element (IE) having a value of zero (maxAggrBW=0). In some embodiments, the indication may alternatively be an explicit indication in which the SIM2 240b requests a single CC be configured for the SIM2 240b. Upon receiving the UAI message, the second gNB 120B suspends dual connectivity (DC) carrier aggregation (CA) at 520. At 522, the second gNB 120B transmits an RRC Reconfiguration to the SIM2 240b to configure the necessary DRBs. At 524, the SIM2 240b transmits an RRC Reconfiguration Complete message to the second gNB 120B.

At 526, the second gNB 120B transmits a SIP INVITE message to the SIM2 240b including the caller ID associated with the incoming voice call over the default IMS bearer. As such, the UE 110 displays the caller ID and allows the user to decide whether or not to accept the incoming call (and drop the active call on SIM1). As noted above, Fig. 5A assumes that the user rejects the call. So, at 528, the SIM2 240b transmits a SIP Call Rejection message (e.g., SIP 486 message, SIP 603 message, etc.) to the second gNB 120B. As a result, the voice call on the SIM1 240a resumes and the incoming call on the SIM2 240b is rejected.

At 530, the SIM2 240b transmits a UAI message to the second gNB 120B indicating that the RRC connection should be released. In some embodiments, this indication may be a PreferredRRCState field indicating Idle mode (PreferredRRCState=Idle) or Inactive mode (PreferredRRCState=INACTIVE). In some embodiments, this indication may alternatively include a new cause that indicates to the second gNB 120B that the SIM2 240b is requesting an RRC release. At 532, the second gNB 120B releases the SIM2 RRC connection.

Fig. 5B illustrates the process when a user accepts an incoming call for SIM2 240b. Since 502-526 are identical to those corresponding steps in Fig. 5A, an explanation of these operations is omitted here. After the caller ID is displayed to the user, if the user wishes to accept the incoming call on the SIM2 240b, the SIM1 240a transmits, at 552, a SIP BYE message to the first gNB 120A indicating that the voice call on the SIM1 240a should be terminated. At 554, the first gNB 120A transmits an acknowledgement (ACK) for the received the SIP BYE message.

At 556, the SIM2 240b transmits a SIP Ringing message to the second gNB 120B so that the calling party knows the call is ringing. At 558, the SIM 2 240b transmits a SIP 200 OK message to the second gNB 120B.

At 560, the SIM1 240a transmits a UAI message to the first gNB 120A indicating that the RRC connection for the SIM1 240a should be released. In some embodiments, this indication may be a PreferredRRCState field indicating either Idle mode (PreferredRRCState=Idle) or Inactive mode (PreferredRRCState=Inactive). In some embodiments, this indication may alternatively include a new cause that indicates to the first gNB 120A that the UE is a MUSIM UE and is accepting a call on another SIM.

At 562, the SIM2 240b transmits a UAI message to the second gNB 120B indicating that DC-CA may now be resumed (since the user is accepting the SIM2 240b incoming call and all but one of the UE's receivers are now allocated to the SIM2 240b call). At 564, the first gNB 120A transmits an RRC Release message to the SIM1 240a releasing the SIM1 RRC connection. As such, the SIM1 240a is now in Idle mode or Inactive mode.

At 566, the second gNB 120B resumes DC-CA for the SIM2 240b. At 568, the second gNB 120B transmits an Activate Dedicated EPS Bearer Context message to the SIM2 240b to configure SIM2 with the bearer context for the bearer that will be carrying the voice packets.

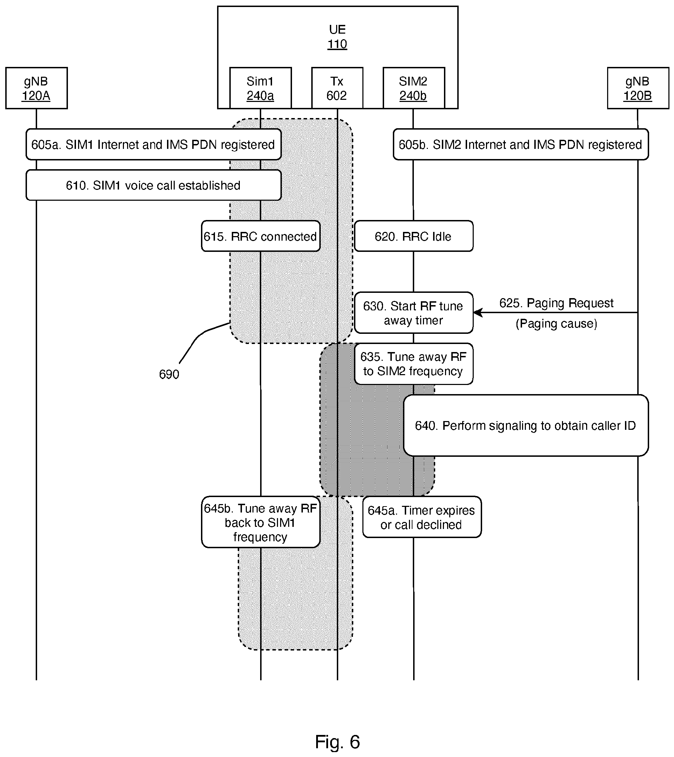

Fig. 6 shows a signaling diagram illustrating a method for tuning away a transmitter 602 of a UE 110 from a first SIM (SIM1 240a) to a second SIM (SIM2 240b) during a caller ID retrieval procedure on the SIM2 240b according to various exemplary embodiments. It should be noted that in Fig. 6 the shaded boxes 690 (only one of which is labeled) indicate which SIM has control over the transmitter 602. In Fig. 6, the transmitter is tuned to the frequency of the second network with which the SIM2 240b communicates during the caller ID retrieval procedure. In some embodiments, the duration of this tune away may be about 223 milliseconds (ms).

At 605a and 605b, the internet protocol (IP) multimedia subsystem (IMS) packet data network (PDN) associated with the SIM1 240a and the SIM2 240b are registered (e.g., upon powering on of the UE 110). At 610, a voice call is established on the SIM1 240a with a first network (the first gNB 120A). As such, at 615, the SIM1 240a is in an RRC connected state. Consequently, at 620, the SIM2 240b is in an RRC Idle state (or RRC Inactive state).

At 625, the SIM2 240b receives a paging request from a second network (the second gNB 120B). The paging request includes a paging cause indicating whether the paging request is for a voice call or a data call. In some embodiments, the paging cause may explicitly indicate that the paging request is for a voice call. In such an embodiment, when the UE 110 receives this paging cause, if the paging cause does not explicitly indicate that the page is for a voice call, the UE 110 may implicitly determine that the page is for a data call. As noted above, it is assumed that the paging request is for a voice call. If, however, the paging request is for a data call, the UE 110 may ignore the paging request (and any subsequent retransmissions of the paging request) while the SIM1 240a has an active call with the first network. Because the SIM1 240b has at least one allocated receiver, it can receive the paging request while the voice call is ongoing on the SIM1 240a.

At 630, the UE 110 activates a radio frequency (RF) tune away timer upon reception of the paging request (for a voice call). The timer expires at the end of a predetermined time period which is based on what amount of time the transmitter can be tuned away from SIM1 without degrading the active voice call on the SIM1 240a (e.g., 500 ms, 300 ms, 250 ms, etc.). Upon expiration of the RF tune away timer, the transmitter 602 is tuned back to the frequency associated with the SIM1 240a regardless of what process is occurring on the SIM2 240b.

At 635, the UE 110 tunes away the transmitter 602 to a frequency associated with the SIM2 240b. At 640, the SIM2 performs the necessary signaling with the second network (second gNB 120B) to obtain the caller ID of the incoming call in a similar manner as explained above with respect to any of Figs. 4A-5B (connection establishment and SIP messaging). As illustrated in Fig. 6, the SIM2 240b has control of the transmitter 602 from the time the transmitter is tuned to the frequency of the second gNB 120B until the end of the caller ID procurement process.

At 645a, either the RF tune away timer expires or the user has rejected the incoming call on the SIM2 240b. In either scenario, the UE 110 tunes the transmitter back to the frequency of the first gNB 120A at 645b. Although not illustrated in Fig. 6, it should be noted that if the call on the SIM2 240b is accepted, then the transmitter may be tuned back to the frequency of the first gNB 120A only when necessary to drop the voice call on the SIM1 240a. Subsequently, the SIM2 240b will control the transmitter 602 for the duration of the SIM2 240b call.

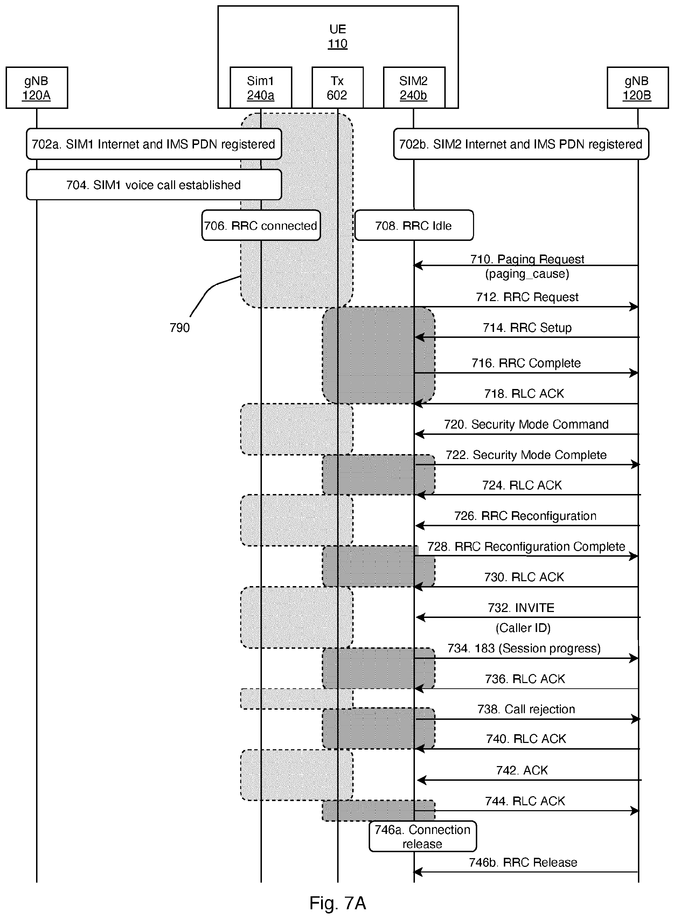

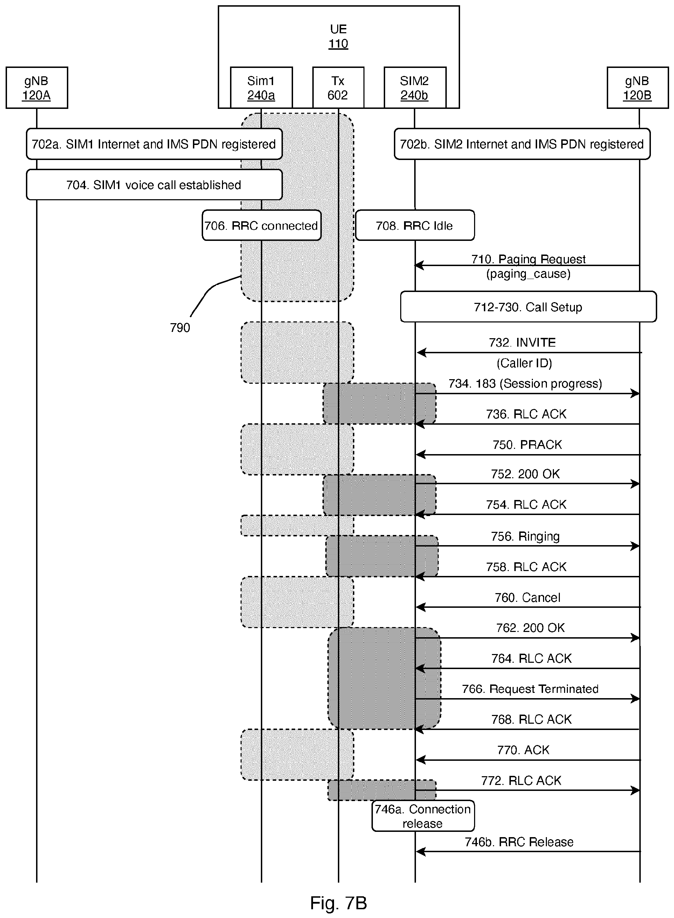

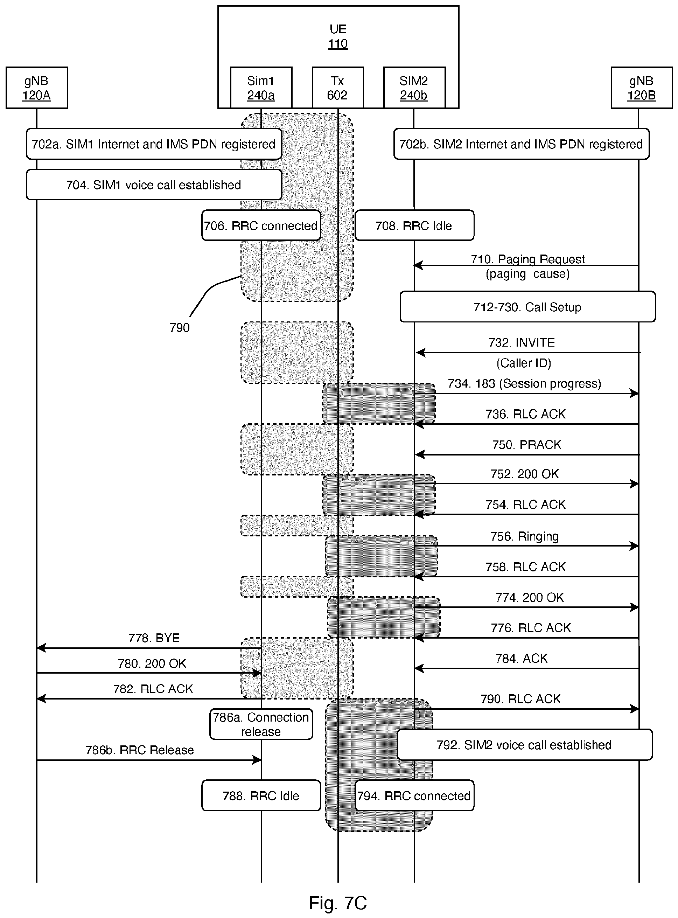

Figs. 7A-7C show signaling diagrams illustrating a method for a procedure-based tuning away of a transmitter of a UE from a first SIM to a second SIM according to various exemplary embodiments. The method illustrated in Figs. 7A-7C differ from that of Fig. 6 in that the tuning away of the transmitter 602 in Figs. 7A-7C is controlled by an RRC layer, a packet transport module (PTM) layer, a packet data convergence protocol (PDCP) layer, an RLC layer, and/or an IMS stack. When a process associated with any of these layers needs to be performed, the transmitter is tuned away to the frequency of the network associated with SIM performing that process. It should be noted that in Fig. 7 the shaded boxes 790 (only one of which is labeled) indicate which SIM has control over the transmitter 602. Each shaded box represents a tuning away of the transmitter 602 to the frequency of the corresponding network. In some embodiments, the longest duration that the transmitter 602 is tuned away from the first gNB 120A is less than 100 ms.

Fig. 7A addresses the user rejecting an incoming call on the SIM2 240b. At 702a and 702b, the internet and IMS PDN associated with the SIM1 240a and the SIM2 240b are registered (e.g., upon powering on of the UE 110). At 704, a voice call is established on the SIM1 240a with a first network (the first gNB 120A). As such, at 706, the SIM1 240a is in an RRC connected state. Consequently, at 708, the SIM2 240b is in an RRC Idle state (or RRC Inactive state).

At 710, the SIM2 240b receives a paging request from a second network (the second gNB 120B). The paging request includes a paging cause indicating whether the paging request is for a voice call or a data call. As noted above, it is assumed that the paging request is for a voice call. If, however, the paging request is for a data call, the UE 110 may ignore the paging request (and any subsequent retransmissions of the paging request) while the SIM1 240a has an active call with the first network. Because the SIM1 240b has at least one allocated receiver, it can receive the paging request while the voice call is ongoing on the SIM1 240a.

Since the SIM2 240a now needs to establish an RRC connection, the transmitter 602 is tuned to the frequency of the second gNB 120B, with which the SIM2 240b communicates (as shown by the shaded box). At 710, the SIM2 240b transmits an RRC Connection Request message to the second network (the second gNB 120B). At 712, the second gNB 120B transmits an RRC Connection Setup message to the SIM2 240b. At 716, the SIM2 240b transmits an RRC Connection Setup Complete message to the second gNB 120B. At 718, the second gNB 120B transmits a radio link control (RLC) acknowledgement (ACK) to the SIM2 240b. In some embodiments, the UE 110 is configured to tune the transmitter 602 back to the frequency of the first gNB 120A once an RLC ACK is received. If the transmitter 602 is tuned away to the SIM1 240a prior to receiving the RLC ACK, then it is possible that the transmitter will need to be tuned back again to the SIM2 240b if an RLC negative ACK (NACK) is received, which means a retransmission would need to be sent. When the transmitter is tuned back to the frequency of the first gNB 120A, the SIM1 240 may transmit/receive any data that was pending while the transmitter 602 was tuned to frequency of the SIM2 240b.

At 720, the second gNB 120B transmits a Security Mode Command to configure the UE 110 to activate AS security. At 722, the SIM2 240b transmits a Security Mode Complete message to the second gNB 120B. Since this requires control of the transmitter 602, the UE's RRC layer may tune the transmitter to the SIM2 240b frequency prior to the transmission at 720. At 724, the second gNB 120B transmits an RLC ACK to the SIM2 240b. Once this RLC ACK is received, the transmitter is tuned back to the SIM1 240a frequency (as indicated by the shaded box).

At 726, the second gNB 120B transmits an RRC Reconfiguration message to the SIM2 240b to configure the necessary DRBs. At 728, the SIM2 240b transmits an RRC Reconfiguration Complete message to the second gNB 120B. Since this requires control of the transmitter 602, the UE's RRC layer may tune the transmitter to the SIM2 240b frequency prior to the transmission at 728. At 730, the second gNB 120B transmits an RLC ACK to the SIM2 240b. Once this RLC ACK is received, the transmitter is tuned back to the SIM1 240a frequency.

At 732, the second gNB 120B transmits a SIP INVITE message to the SIM2 240b including the caller ID associated with the incoming voice call over the default IMS bearer. As such, the UE 110 displays the caller ID and allows the user to decide whether or not to accept the incoming call (and drop the active call on the SIM1 240a). At 734, the SIM2 240b transmits a SIP 183 (Session Progress) message to the second gNB 120B. Since this requires control of the transmitter 602, the UE's IMS layer may tune the transmitter to the SIM2 240b frequency prior to the transmission at 734. At 736, the second gNB 120B transmits an RLC ACK to the SIM2 240b. Once this RLC ACK is received, the transmitter is tuned back to the SIM1 240a frequency.

As noted above, Fig. 7A assumes that the user rejects the call. So, at 738, the SIM2 240b transmits a SIP Call Rejection message (e.g., SIP 486 message, SIP 603 message, etc.) to the second gNB 120B. This rejection may be an indication to the second network that the call on the SIM1 240a is preferred. Since this requires control of the transmitter 602, the UE's IMS layer may tune the transmitter to the SIM2 240b frequency prior to the transmission at 738. It should be noted that, although not shown, the call establishment process may include other IMS messages (e.g., provisional response ACK (PRACK), PRACK-ACK, Ringing, OK, messages) between the RLC ACK at 736 and the call rejection at 738. At 740, the second gNB 120B transmits an RLC ACK to the SIM2 240b. Once this RLC ACK is received, the transmitter is tuned back to the SIM1 240a frequency.

At 742, the second gNB 120B transmits an ACK to the SIM2 240b. At 744, the SIM2 240b transmits an RLC ACK to the second gNB 120B. Since this requires control of the transmitter 602, the UE's RLC layer may tune the transmitter to the SIM2 240b frequency prior to the transmission at 744. In some embodiments, the SIM2 240b may autonomously release its RRC connection at 746a. If the SIM2 240b is a data preferred SIM, then the SIM2 240b may force an RRC connection release to avoid further exchange of data with the second network, which may unnecessarily cause a tune away of the transmitter 602 from the SIM1 240a frequency, thus degrading the active voice call on the SIM1 240a. In some embodiments, the SIM2 240b may alternatively wait for the second network to send the RRC Release message at 746b. If the SIM2 240b is not a data preferred SIM, then it may wait for the network to release the connection.

In some embodiments, to ensure that there is agreement between the SIM2 240b and the second network regarding the RRC connection release of the SIM2 RRC connection, the SIM2 240b may transmit a UAI similar to that discussed above in 530 of Fig. 5A to indicate to the second network that the SIM2 240b is requesting an RRC release (preferredRRCState=IDLE or preferredRRCState=INACTIVE). In response, the second network may send the RRC Release message at 746b to move the SIM2 240b to RRC Idle mode (or RRC Inactive mode).

Fig. 7B addresses the user ignoring an incoming call on the SIM2 240b. A description of 702a-736 and 746a,b is omitted here for clarity and conciseness. The signaling of 712-730 is also grouped together in Fig. 7B as "Call Setup." At 750, the second network (the second gNB 120B) transmits a PRACK message to the SIM2 240b in response to the SIP 183 message at 734. At 752, the SIM2 240b transmits a SIP 200 OK message to the second gNB 120B. Since this requires control of the transmitter 602, the UE's IMS layer may tune the transmitter to the SIM2 240b frequency prior to the transmission at 752. At 754, the second gNB 120B transmits an RLC ACK to the SIM2 240b. Once this RLC ACK is received, the transmitter is tuned back to the SIM1 240a frequency.

At 756, the SIM2 240b transmits a SIP Ringing message to the second gNB 120B. Since this requires control of the transmitter 602, the UE's IMS layer may tune the transmitter to the SIM2 240b frequency prior to the transmission at 756. At 758, the second gNB 120B transmits an RLC ACK to the SIM2 240b. Once this RLC ACK is received, the transmitter is tuned back to the SIM1 240a frequency.

As noted above, in Fig. 7B, it is assumed that the user ignores the incoming call on the SIM2 240b. As such, the call continues to ring until it times out. Once the call times out, the second gNB 120B transmits a SIP Cancel message at 760. At 762, the SIM2 240b transmits a SIP 200 OK message to the second gNB 120B. At 764, the second gNB 120B transmits an RLC ACK to the SIM2 240b. At 766, the SIM2 240b transmits a Request Terminated message to the second gNB 120B. At 768, the second gNB 120B transmits an RLC ACK to the SIM2 240b. Since the transmissions at 762 and 766 require control of the transmitter 602, the UE's IMS layer may tune the transmitter to the SIM2 240b frequency prior to the transmission at 762. At 768, the second gNB 120B transmits an RLC ACK to the SIM2 240b. Once this RLC ACK is received, the transmitter is tuned back to the SIM1 240a frequency.

At 770, the second gNB 120 transmits an ACK message to the SIM2 240b. At 772, the SIM2 240b transmits an RLC ACK to the second gNB 120B. Since this requires control of the transmitter 602, the UE's RLC layer may tune the transmitter to the SIM2 240b frequency prior to the transmission at 772. As discussed above, the SIM2 240b may autonomously release its RRC connection at 746a, wait for the second network to send the RRC Release message at 746b, or transmit a UAI to the second network to request an RRC release.

Fig. 7C addresses the user accepting an incoming call on the SIM2 240b. A description of 702a-758 is omitted here for clarity and conciseness. The signaling of 712-730 is again grouped together in Fig. 7B as "Call Setup." At 774, the SIM2 240b transmits a SIP 200 OK message to the second network (the second gNB 120B) to indicate that the call is being accepted. Since this transmission requires control of the transmitter 602, the UE's IMS layer may tune the transmitter to the SIM2 240b frequency prior to the transmission at 774. At 776, the second gNB 120B transmits an RLC ACK to the SIM2 240b. Once this RLC ACK is received, the transmitter is tuned back to the SIM1 240a frequency.

Now that the SIM1 240a has control of the transmitter and the user has decided to accept the incoming call on the SIM2 240b, the SIM1 240a transmits a SIP BYE message to the first network (the first gNB 120A) at 778. The first gNB 120A transmits a SIP 200 OK message to the SIM1 240a. The SIM1 240a transmits an RLC ACK to the first gNB 120A. Once this RLC ACK is transmitted, the transmitter 602 may be tuned back to the SIM2 240b frequency so that the call on the SIM2 may proceed. While the SIM1 is terminating the voice call on the SIM1, the second gNB 120B transmits an ACK message to the SIM2 240b at 784.

Similar to the behavior of the SIM2 240b in releasing the RRC connection, the SIM1 240a may autonomously release its RRC connection at 746a or wait for the second network to send the RRC Release message at 746b depending on whether or not SIM1 240a is a data preferred SIM. As a result, the SIM1 240a is in an RRC Idle mode (or RRC Inactive mode) at 788.

In some embodiments, to ensure that there is agreement between the SIM1 240a and the first network regarding the RRC connection release of the SIM1 RRC connection, the SIM1 240a may transmit a UAI similar to that discussed above in 530 of Fig. 5A to indicate to the first network that the SIM1 240a is requesting an RRC release (preferredRRCState=IDLE or preferredRRCState=INACTIVE). In response, the first network may send the RRC Release message at 786b to move the SIM1 240a to RRC Idle mode(or RRC Inactive mode) at 788.

At 790, the SIM2 240b transmits an RLC ACK to the second gNB 120B in response to the ACK received from the second gNB 120B at 784. At 792, the voice call on the SIM2 240b is established. As such, the SIM2 240a is now in RRC connected mode at 794.

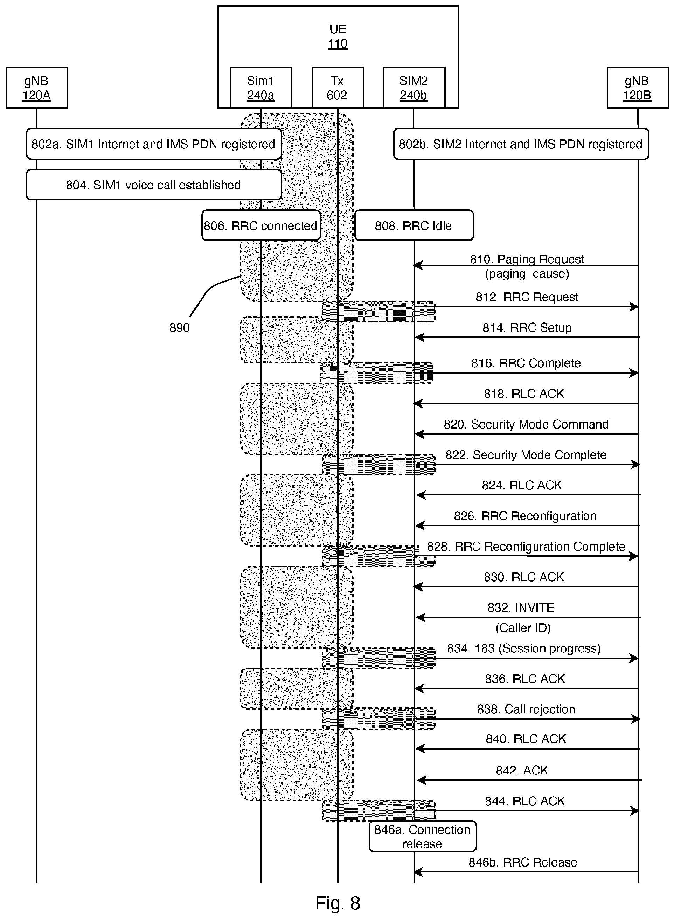

Fig. 8 shows a signaling diagram illustrating a method for a transmission-based tuning away of a transmitter of a UE from a first SIM to a second SIM according to various exemplary embodiments. The method illustrated in Fig. 8 differs from that of Fig. 6 and Figs. 7A-C in that the tuning away of the transmitter 602 in Fig. 8 is controlled by the medium access control (MAC) layer or L1 layer. When there is an uplink buffer at the MAC layer, the MAC layer will reserve the transmitter 602 for the SIM that needs to perform the transmission of the protocol date unit (PDU). It should be noted that in Fig. 8 the shaded boxes 890 (only one of which is labeled) indicate which SIM has control over the transmitter 602. Each shaded box represents a tuning away of the transmitter 602 to the frequency of the corresponding network (gNB).

Fig. 8 addresses the user rejecting an incoming call on the SIM2 240b. A description of the signaling in 802a-846b is omitted here since this signaling is identical to that of 702a-746b in Fig. 7A. The difference between method illustrated in Fig. 8 and that of Fig. 7A is the tuning away of the transmitter 602. As explained above, in Fig. 7A, the tuning away is process based. However, in Fig. 8, the tuning away is transmission based. As such, the transmitter 602 is tuned to the frequency of the second gNB 120B whenever the SIM2 240b needs to send a transmission to the second network (the gNB 120B). As a result, the active voice call on the SIM1 240a is interrupted more frequently but for significantly shorter time durations (e.g., less than 1 ms for each occurrence). A discussion of this transmission-based tuning away of the transmitter 602 for the scenarios in which the incoming SIM2 240b call is ignored or accepted is omitted here for brevity. It should be noted however that the same transmission-based tuning away principle applies to those scenarios.

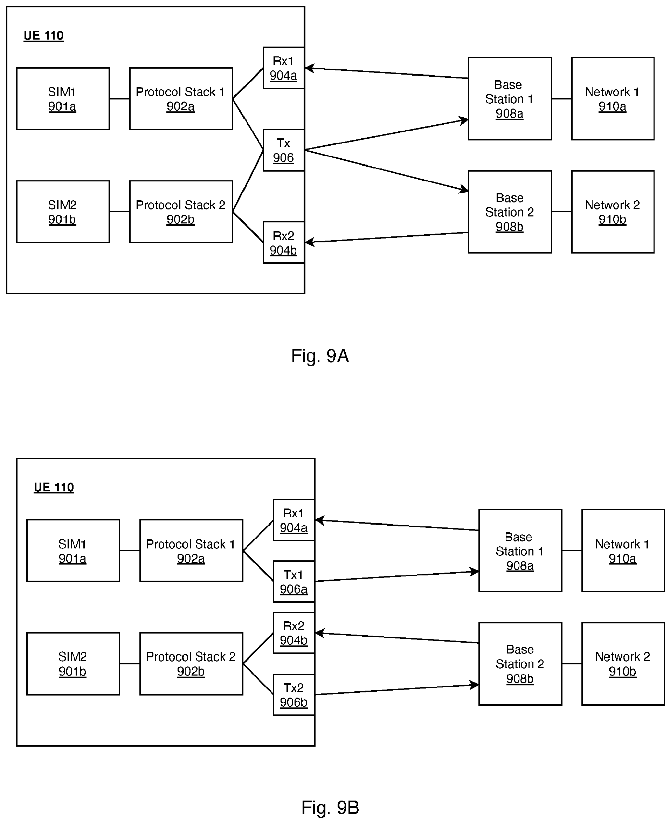

Fig. 9A shows an exemplary MUSIM UE 110 having a single transmitter 906, as described in the above embodiments. As illustrated in Fig. 9A, in some embodiments, the UE 110 may include a first SIM (SIM1 901a) having an associated protocol stack (protocol stack 1 902a) and an associated receiver (Rx1 904a). Similarly, the UE 110 may include a second SIM (SIM1 901b) having an associated protocol stack (protocol stack 2 902b) and an associated receiver (Rx2 904b). Both the SIM1 901a and the SIM2 901b share a single transmitter 906 in the manner explained above. The SIM1 901a communicates with the first base station (Base Station 1 908a) of a first network (Network 1 910a) via the Rx1 904a and the Tx 906. The SIM2 901b communicates with a second base station (Base Station 2 908b) of a second network (Network 2 910b) via the Rx2 904b and the Tx 906. Although only two receivers (RX1 904a, RX2 904b) are shown in Fig. 9A, it should be noted that the UE 110 may include multiple receivers.

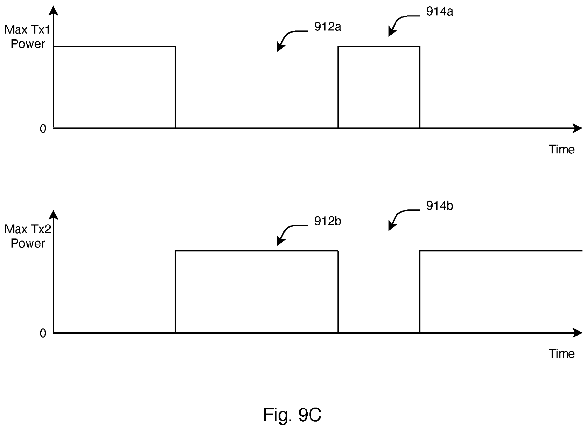

Fig. 9B shows an exemplary MUSIM UE 110 having multiple transmitters according to various exemplary embodiments. Fig. 9C shows an exemplary transmission power graph relating to power management of the multi-transmitter MUSIM UE of Fig. 9B. As illustrated in Fig. 9B, in some embodiments, the UE 110 may include a first SIM (SIM1 901a) having an associated protocol stack (protocol stack 1 902a), an associated receiver (Rx1 904a), and an associated transmitter (Tx1 906a). The SIM1 901a communicates with first base station (Base Station 1 908a) of a first network (Network 1 908a) via a Rx1 904a and a Tx1 906a. Similarly, the UE 110 may include a second SIM (SIM1 901b) having an associated protocol stack (protocol stack 2 902b), an associated receiver (Rx2 904b), and an associated transmitter (Tx2 906b). The SIM2 901b communicates with a second base station (Base Station 2 908b) of a second network (Network 2 908b) via a Rx2 904b and a Tx2 906b. Although only two receivers (RX1 904a, RX2 904b) are shown in Fig. 9A, it should be noted that the UE 110 may include multiple receivers.

In the following description of Fig. 9C, it is assumed that the SIM1 901a is in an RRC connected mode and has an active voice call with the Tx1 906a tuned to the frequency of base station 1 908a. When a caller ID retrieval process (as explained above) begins (upon reception of paging request indicating a voice call), the Tx2 906b is tuned to the frequency of the base station 2 908a. In some embodiments, when the SIM2 901b needs to transmit messages to the base station 2 908b for the caller ID retrieval process, the max Tx1 power is reduced to 0, as indicated by 912a, and the max Tx2 power is set to some nonzero value, as indicated by 912b. Conversely, when the SIM2 901b has completed these transmissions, the max Tx2 power is reduced to 0, as indicated by 914b, and the max Tx1 power is set to some nonzero value, as indicated by 914a. This duty cycle may be controlled by the protocol stacks 902a,b based on a priority of the transmissions on the two SIMs 901a,b.

### Examples

In a first example, a method performed by a user equipment (UE), comprising initiating a first voice call with a first network associated with a first subscriber identity module (SIM) of the UE, receiving a paging request from a second network indicating an incoming voice call associated with a second SIM of the UE, wherein the paging request is received while the first voice call is active, performing a radio resource control (RRC) connection setup with the second network and performing one of accepting the incoming voice call or rejecting the incoming voice call.

In a second example, the method of the first example, wherein, when the incoming voice call is rejected, the method further comprising transmitting a UE assistance info (UAI) message to the second network including an RRC connection release request and receiving an RRC connection release from the second network.

In a third example, the method of the first example, wherein, when the incoming voice call is accepted, the method further comprising terminating the first voice call, transmitting a UE assistance info (UAI) message to the first network including an RRC connection release request and receiving an RRC connection release from the first network.

In a fourth example, the method of the first example, further comprising transmitting an indication to the second network that the UE should be configured with a single component carrier (CC) and exchanging session information protocol (SIP) messages with the second network to retrieve a caller identification (ID) of the incoming call.

In a fifth example, the method of the fourth example, wherein the indication is configured to cause the network to suspend dual connectivity (DC) and carrier aggregation (CA).

In a sixth example, the method of the fourth example, wherein the indication is an explicit indication provided as part of an RRC Connection Setup Complete message sent by the UE to the second network.

In a seventh example, the method of the fourth example, wherein the indication is an implicit indication provided as part of a UE assistance information (UAI) message sent by the UE to the second network, wherein the implicit indication is a *maxAggrBW* information element (IE) having a value of zero.

In an eighth example, the method of the seventh example, further comprising transmitting a second indication to the second network that dual connectivity (DC) and carrier aggregation (CA) may resume.

In a ninth example, the method of the eighth example, wherein the second indication is provided as part of an RRC Reconfiguration Complete message sent by the UE to the second network.

In a tenth example, the method of the eighth example, wherein the second indication is provided as part of UE assistance info (UAI) message sent by the UE to the second network.

In an eleventh example, a user equipment (UE) comprises a transceiver configured to communicate with a first network and a second network and a processor communicatively coupled to the transceiver and configured to perform any of the operations of the first through tenth examples.

In an twelfth example, a method performed by a base station, comprising transmitting a paging request to a user equipment (UE) indicating an incoming voice call associated with a second subscriber identity module (SIM) of the UE, wherein the UE receives the paging request while a first voice call associated with a first SIM of the UE is active, performing a radio resource control (RRC) connection setup with the UE, receiving an indication from the UE that the UE should be configured with a single component carrier (CC); suspending dual connectivity (DC) and carrier aggregation (CA) and exchanging session information protocol (SIP) messages with the UE to provide the UE with a caller identification (ID) of the incoming call.

In a thirteenth example, the method of the twelfth example, wherein the indication is an explicit indication provided as part of an RRC Connection Setup Complete message received from the UE.

In a fourteenth example, the method of the twelfth example, wherein the indication is an implicit indication provided as part of a UE assistance information (UAI) message received from the UE.

In a fifteenth example, the method of the fourteenth example, wherein the implicit indication is a *maxAggrBW* information element (IE) having a value of zero.

In a sixteenth example, the method of the twelfth example, wherein, when the incoming voice call is rejected, the method further comprises receiving a UE assistance info (UAI) message from the UE including an RRC connection release request and transmitting an RRC connection release to the UE.

In a seventeenth example, the method of the twelfth example, wherein, when the incoming voice call is accepted, the method further comprises receiving a second indication from the UE that DC-CA may resume and resuming DC-CA.

In an eighteenth example, the method of the seventeenth example, wherein the second indication is provided as part of an RRC Reconfiguration Complete message received from the UE.

In a nineteenth example, the method of the seventeenth example, wherein the second indication is provided as part of UE assistance info (UAI) message received from the UE.

In an twentieth example, a base station comprises a transceiver configured to communicate with a user equipment (UE) and a processor communicatively coupled to the transceiver and configured to perform any of the operations of the twelfth through nineteenth examples.

In a twenty first example, a method performed by a user equipment (UE), comprising initiating a first voice call with a first network associated with a first subscriber identity module (SIM) of the UE, receiving a paging request from a second network indicating an incoming voice call associated with a second SIM of the UE, wherein the paging request is received while the first voice call is active, performing a radio resource control (RRC) connection setup with the second network, exchanging session information protocol (SIP) messages with the second network to retrieve a caller identification (ID) of the incoming call and tuning a transmitter of the UE to a frequency associated with the second network at one or more predetermined periods during the RRC connection setup and the SIP messages exchange with the second network.

In a twenty second example, the method of the twenty first examples, wherein, when the incoming voice call is rejected and the second SIM is a data-preferred SIM, the method further comprises performing an RRC connection release for the RRC connection with the second network, wherein performing the RRC connection release comprises transmitting a UE assistance info (UAI) message to the second network including an RRC connection release request and receiving an RRC connection release from the second network.

In an twenty third example, a user equipment (UE) comprises a transceiver configured to communicate with a first network and a second network and a processor communicatively coupled to the transceiver and configured to perform any of the operations of the twenty first and twenty second examples.

Those skilled in the art will understand that the above-described exemplary embodiments may be implemented in any suitable software or hardware configuration or combination thereof. An exemplary hardware platform for implementing the exemplary embodiments may include, for example, an Intel x86 based platform with compatible operating system, a Windows OS, a Mac platform and MAC OS, a mobile device having an operating system such as iOS, Android, etc. In a further example, the exemplary embodiments of the above described method may be embodied as a program containing lines of code stored on a non-transitory computer readable storage medium that, when compiled, may be executed on a processor or microprocessor.

Although this application described various aspects each having different features in various combinations, those skilled in the art will understand that any of the features of one aspect may be combined with the features of the other aspects in any manner not specifically disclaimed or which is not functionally or logically inconsistent with the operation of the device or the stated functions of the disclosed aspects.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

It will be apparent to those skilled in the art that various modifications may be made in the present disclosure, without departing from the spirit or the scope of the disclosure. Thus, it is intended that the present disclosure cover modifications and variations of this disclosure provided they come within the scope of the appended claims and their equivalent.

### Additional Numbered Statements:

1. A processor of a user equipment (UE) configured to perform operations comprising:
   initiating a first voice call with a first network associated with a first subscriber identity module (SIM) of the UE;
   receiving a paging request from a second network indicating an incoming voice call associated with a second SIM of the UE, wherein the paging request is received while the first voice call is active;
   performing a radio resource control (RRC) connection setup with the second network; and
   performing one of accepting the incoming voice call or rejecting the incoming voice call.
2. The processor of statement 1, wherein, when the incoming voice call is rejected, the operations further comprise:
   transmitting a UE assistance info (UAI) message to the second network including an RRC connection release request; and
   receiving an RRC connection release from the second network.
3. The processor of statement 1 or statement 2, wherein, when the incoming voice call is accepted, the operations further comprise:
   terminating the first voice call;
   transmitting a UE assistance info (UAI) message to the first network including an RRC connection release request; and
   receiving an RRC connection release from the first network.
4. The processor of any preceding statement, wherein the operations further comprise:
   transmitting an indication to the second network that the UE should be configured with a single component carrier (CC); and
   exchanging session information protocol (SIP) messages with the second network to retrieve a caller identification (ID) of the incoming call.
5. The processor of statement 4, wherein the indication is configured to cause the network to suspend dual connectivity (DC) and carrier aggregation (CA).
6. The processor of statement 4 or statement 5, wherein the indication is an explicit indication provided as part of an RRC Connection Setup Complete message sent by the UE to the second network.
7. The processor of statement 4 or statement 5, wherein the indication is an implicit indication provided as part of a UE assistance information (UAI) message sent by the UE to the second network, wherein the implicit indication is a *maxAggrBW* information element (IE) having a value of zero.
8. The processor of statement 7, wherein the operations further comprise:
   transmitting a second indication to the second network that dual connectivity (DC) and carrier aggregation (CA) may resume.
9. The processor of statement 8, wherein the second indication is provided as part of an RRC Reconfiguration Complete message sent by the UE to the second network.
10. The processor of statement 8, wherein the second indication is provided as part of UE assistance info (UAI) message sent by the UE to the second network.
11. A processor of a base station configured to perform operations comprising:
   transmitting a paging request to a user equipment (UE) indicating an incoming voice call associated with a second subscriber identity module (SIM) of the UE, wherein the UE receives the paging request while a first voice call associated with a first SIM of the UE is active;
   performing a radio resource control (RRC) connection setup with the UE;
   receiving an indication from the UE that the UE should be configured with a single component carrier (CC);
   suspending dual connectivity (DC) and carrier aggregation (CA); and
   exchanging session information protocol (SIP) messages with the UE to provide the UE with a caller identification (ID) of the incoming call.
12. The processor of statement 11, wherein the indication is an explicit indication provided as part of an RRC Connection Setup Complete message received from the UE.
13. The processor of statement 11, wherein the indication is an implicit indication provided as part of a UE assistance information (UAI) message received from the UE, wherein the implicit indication is a *maxAggrBW* information element (IE) having a value of zero.
14. The processor of any of statements 11 to 13, wherein, when the incoming voice call is rejected, the operations further comprise:
   receiving a UE assistance info (UAI) message from the UE including an RRC connection release request; and
   transmitting an RRC connection release to the UE.
15. The processor of any of statements 11 to 14, wherein, when the incoming voice call is accepted, the operations further comprise:
   receiving a second indication from the UE that DC-CA may resume; and
   resuming DC-CA.

## Claims

1. A processor configured to:
generate, for transmission to a multi-user subscriber identity module, MUSIM, user equipment, UE, a paging request indicating an incoming voice call associated with a first SIM of the MUSIM UE;
perform a radio resource control, RRC, connection setup with the MUSIM UE;
process, based on signaling received from the MUSIM UE, a UE assistance information, UAI, message including an RRC connection release request; and
generate, for transmission to the MUSIM UE, an RRC connection release.

2. The processor of claim 1, further configured to:
process, based on signaling from the MUSIM UE, an indication that the MUSIM UE should be configured with a single component carrier, CC; and
exchange session information protocol, SIP, messages with the MUSIM UE to send a caller identification, ID, of the incoming call.

3. The processor of claim 2, further configured to:
suspend dual connectivity, DC, and carrier aggregation, CA, based on the indication.

4. The processor of claim 2 or claim 3, wherein the indication is an explicit indication provided as part of an RRC Connection Setup Complete message sent by the MUSIM UE.

5. The processor of claim 2 or claim 3, wherein the indication is an implicit indication provided as part of a UE assistance information, UAI, message sent by the MUSIM UE, wherein the implicit indication is a *maxAggrBW* information element, IE, having a value of zero.

6. The processor of claim 5, further configured to:
process, based on signaling received from the MUSIM UE, a second indication indicating that dual connectivity, DC, and carrier aggregation, CA, may resume.

7. The processor of claim 6, wherein the second indication is provided as part of an RRC Reconfiguration Complete message sent by the MUSIM UE.

8. The processor of claim 6, wherein the second indication is provided as part of UE assistance info, UAI, message sent by the MUSIM UE.

9. A base station comprising the processor of any of claims 1-8.
